# EUROPEAN PATENT APPLICATION

(11) **EP 2 495 751 A1**
(43) Date of publication of application: **05.09.2012**
(21) Application number: 10826559.6
(22) Date of filing: 19.10.2010
(51) Int. Cl.: H01L 21/02, G05B 19/418, G06Q 50/00

(54) **PRODUCT MANUFACTURING METHOD AND MANUFACTURING SYSTEM**

(30) Priority: 26.10.2009 JP 2009245588
(71) Applicant: Sharp Kabushiki Kaisha, Osaka-shi, Osaka 545-8522 (JP)
(72) Inventor: KAWASAKI, Takashi, Osaka-shi, Osaka 545-8522 (JP); BAN, Chiharu, Osaka-shi, Osaka 545-8522 (JP); URABE, Masuhiro, Osaka-shi, Osaka 545-8522 (JP); MIYASHOH, Tomoaki, Osaka-shi, Osaka 545-8522 (JP)
(74) Representative: Müller-Boré & Partner Patentanwälte
(86) International application number: PCT/JP2010/068358
(87) International publication number: WO 2011/052427

(57) **Abstract**

Manufacturing condition data stored in a storage unit (11) of a saving device (10) is transmitted to a control device (20) placed in an area (CA) different from an area (PA) where the saving device (10) is placed. The transmitted manufacturing condition data is stored in a storage unit (21) of the control device (20). A manufacturing device (30) is controlled based on the manufacturing condition data stored in the storage unit (21) to manufacture a product. Process data for the manufacturing condition data is transmitted and stored in the storage unit (21). After the step of manufacturing the product, the manufacturing condition data is erased from the storage unit (21). The process data is transmitted to the saving device (10). The transmitted process data is stored in the storage unit (11). After the process data is transmitted to the saving device (10), the process data is erased from the storage unit (21). Thereby, maintenance and/or inspection can be easily performed, and leak of information indicating a manufacturing condition can be prevented.

## Description

### TECHNICAL FIELD

The present invention relates to a manufacturing method and a manufacturing system for a product, and particularly to a manufacturing method and a manufacturing system for a product which use a storage device storing a manufacturing condition.

### BACKGROUND ART

Some manufacturing devices for manufacturing products have a storage device storing a manufacturing condition.

For example, Japanese Patent Laying-Open No. 4-99279 (Patent Literature 1) discloses a supply device including a microcomputer which stores a heating output pattern of a heater and an output pattern of a carrier gas as the manufacturing conditions described above.

### CITATION LIST

### PATENT LITERATURE

PTL 1: Japanese Patent Laying-Open No. 4-99279

### SUMMARY OF INVENTION

### TECHNICAL PROBLEM

In many cases, a place where a manufacturing device such as the supply device described in the above publication is installed is not a place where entry of people is severely restricted in terms of information management (hereinafter referred to as a "controlled area"). Therefore, there is a problem that leak of information about a manufacturing condition stored in a manufacturing system is likely to occur.

On the other hand, if the entire manufacturing system is installed in the controlled area, leak of information can be prevented, but entry of an operator who will perform maintenance and/or inspection of the manufacturing system is restricted. Therefore, there is a problem that it is difficult to perform maintenance and/or inspection of the manufacturing system.

Accordingly, one object of the present invention is to provide a manufacturing method and a manufacturing system for which maintenance and/or inspection can be easily performed and leak of information indicating a manufacturing condition can be prevented.

### SOLUTION TO PROBLEM

According to an aspect of the present invention, a manufacturing method for a product in a manufacturing system having a first device storing first information indicating a target value which is a manufacturing condition for the product, in a first storage unit, and a second device controlling a manufacturing device based on the target value, which are installed in different areas, includes the steps of:
transmitting the first information to the second device;
storing the transmitted first information in a second storage unit of the second device;
causing the manufacturing device to manufacture the product by controlling the manufacturing device based on the first information stored in the second storage unit;
transmitting second information which is a measurement value relative to the target value obtained when the product is manufactured, to the second storage unit and storing the second information in the second storage unit;
erasing the first information from the second storage unit after the step of causing the manufacturing device to manufacture the product;
transmitting the second information to the first device;
storing the transmitted second information in the first storage unit; and
erasing the second information from the second storage unit after transmitting the second information to the first device.

In the manufacturing method for the product, the first device is installed in the area having a security level higher than that of the area in which the second device is installed.

The manufacturing method for the product further includes the step of encrypting the first information in the first device, wherein, in the step of transmitting the first information to the second device, the first information is transmitted in an encrypted state.

The manufacturing method for the product further includes the step of encrypting the second information in the second device, wherein, in the step of transmitting the second information to the first device, the second information is transmitted in an encrypted state.

In the manufacturing method for the product, in the steps of storing the first information and/or the second information in the first storage unit, the first information and/or the second information are/is stored in an encrypted state in the first storage unit.

The manufacturing method for the product further includes the steps of: changing at least one of the first information and the second information to a relative value or dummy data in the second device; and displaying the relative value or the dummy data on an output device.

The manufacturing method for the product further includes the steps of: generating a request signal requesting transmission of new first information from the first device to the second device after the step of erasing the first information from the second storage unit; and transmitting the request signal to the first device.

In the manufacturing method for the product, the manufacturing device includes a plurality of processing units each performing processing for manufacturing the product, in the second device, and the manufacturing method includes the steps of: storing, for each of the processing units, the first information corresponding to the processing unit in the first storage unit; including third information specifying either one of the plurality of processing units in the request signal, and transmitting the request signal including the third information; transmitting the first information to the second device; the second device performing processing based on the first information using the processing unit specified by the third information; including, for each of the processing units, the third information in the second information transmitted by the processing unit, and storing the second information including the third information in the second storage unit; transmitting the second information including the third information to the first device; and storing the transmitted second information in the first storage unit.

The manufacturing method for the product includes the steps of: storing the first information and the second information each in an encrypted state in the first storage unit; decrypting the encrypted first information and/or second information, using a decryption unit of the first device; and transmitting the decrypted first information and/or second information to a third device connected to the first device.

In the manufacturing method for the product, the first device includes a plurality of the second devices, and the manufacturing method includes the steps of: the first device and each of the second devices transmitting the first information to the second storage unit, using a dedicated line different for each of the second devices; and transmitting the second information to the first storage unit.

According to another aspect of the present invention, a manufacturing system includes a manufacturing device manufacturing a product, a control device controlling operation of the manufacturing device, and an information processing device capable of communicating with the control device,
wherein the information processing device is placed in an area different from an area for the manufacturing device and the control device, and includes a first storage unit storing first information indicating a target value which is a manufacturing condition for the product, and a first transmitting unit transmitting the first information to the control device,
the manufacturing device manufactures the product through control by the control device based on the first information, and transmits second information which is a measurement value relative to the target value obtained when the product is manufactured, to the control device,
said control device includes
a second storage unit storing the first information transmitted from the information processing device and the second information transmitted from the manufacturing device,
an erasing unit erasing the first information from the second storage unit based on manufacturing of the product, and
a second transmitting unit transmitting the second information to the information processing device,
the information processing device stores the second information transmitted from the control device in said first storage unit, and
the erasing unit erases the second information from the second storage unit after the second information is transmitted to the information processing device.

### ADVANTAGEOUS EFFECTS OF INVENTION

As described above, according to the present invention, leak of information indicating a manufacturing condition can be prevented. Further, maintenance and/or inspection of the manufacturing system can be easily performed.

### BRIEF DESCRIPTION OF DRAWINGS

Fig. 1 is a view showing a schematic configuration of a manufacturing system.
Fig. 2 is a block diagram showing a hardware configuration of a computer system functioning as a control device.
Fig. 3 is a view showing a block of the manufacturing system.
Fig. 4 is a view showing a sequence chart in the manufacturing system.
Fig. 5 is a view showing an example of a data structure of manufacturing condition data.
Fig. 6 is a view showing an example of a data structure of process data.
Fig. 7 is a flowchart showing a flow of processing in a saving device.
Fig. 8 is a flowchart showing a flow of processing in a control device.
Fig. 9 is a flowchart showing a flow of processing in a manufacturing device.
Fig. 10 is a flowchart showing a flow of processing in the manufacturing system.
Fig. 11 is a view showing a block of another manufacturing system.
Fig. 12 is a flowchart showing the first half of a flow of processing in the manufacturing system in Fig. 11.
Fig. 13 is a flowchart showing the second half of the flow of processing in the manufacturing system in Fig. 11.
Fig. 14 is a view showing a block of still another manufacturing system.
Fig. 15 is a flowchart showing the first half of a flow of processing in the manufacturing system in Fig. 14.
Fig. 16 is a flowchart showing the second half of the flow of processing in the other manufacturing system in Fig. 14.
Fig. 17 is a view showing a block of still another manufacturing system.
Fig. 18 is a flowchart showing the first half of a flow of processing in the manufacturing system in Fig. 17.
Fig. 19 is a flowchart showing the second half of the flow of processing in the manufacturing system in Fig. 17.
Fig. 20 is a view showing a block of a film formation manufacturing system.
Fig. 21 is a view indicating directions in which substrates are moved.
Fig. 22 is a view showing the state of a film formation device after the substrates are moved from a front chamber to film formation units.
Fig. 23 is a view showing the state where film formation processing is performed on the substrates.
Fig. 24 is a view showing the state of the film formation device after a film-formed substrate is transported from a first film formation unit to the front chamber.
Fig. 25 is a view showing the state of the film formation device after a transport unit transports a new substrate from the front chamber to the first film formation unit.
Fig. 26 is a view showing a configuration of a manufacturing system in which a plurality of control devices are connected to a saving device.

### DESCRIPTION OF EMBODIMENTS

Hereinafter, embodiments of the present invention will be described with reference to the drawings. In the description below, identical parts will be designated by the same reference signs. Since their names and functions are also the same, the detailed description thereof will not be repeated.

### [Embodiment 1]

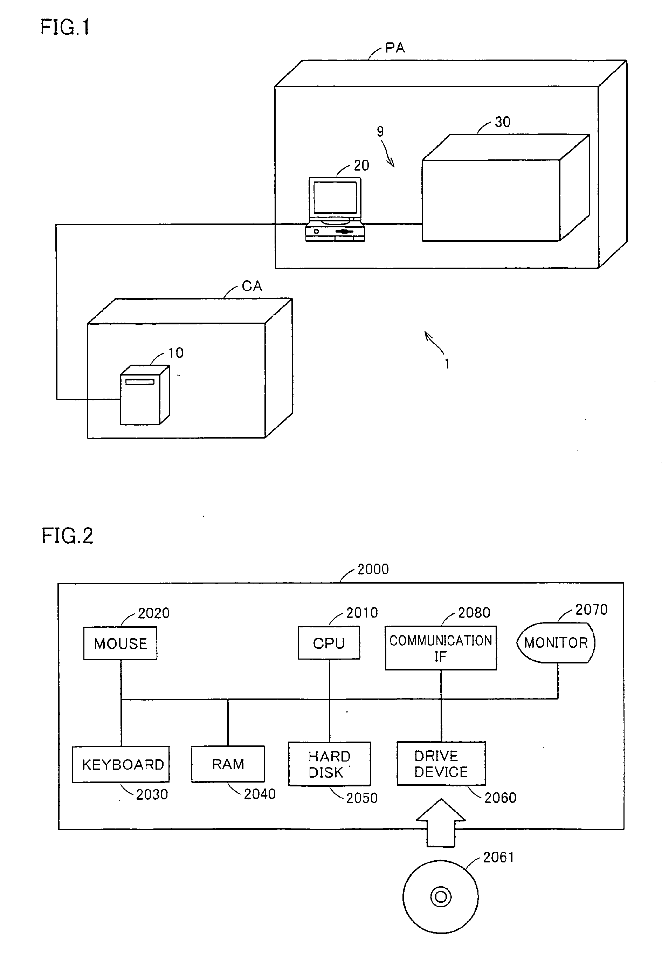

One embodiment of a manufacturing system in accordance with the present invention will be described below with reference to Figs. 1 to 10.

### <Overview of Manufacturing System 1>

Fig. 1 is a view showing a schematic configuration of a manufacturing system 1 in accordance with the present embodiment. Referring to Fig. 1, manufacturing system 1 includes a saving device (information processing device, first device) 10 and a basic system 9. Basic system 9 includes a control device (second device) 20 and a manufacturing device 30.

Saving device 10 is installed in an area CA. Control device 20 and manufacturing device 30 are installed in an area PA. Area CA is an area with higher security than area PA. Specifically, area CA is an area where entry of people is restricted more severely than area PA from the viewpoint of ensuring information security (i.e., controlled area).

Saving device 10 is connected to control device 20 such that it can communicate therewith. Control device 20 is connected to manufacturing device 30 such that it can communicate therewith. Saving device 10 transmits data to control device 20 in response to a request from control device 20. Control device 20 controls operation of manufacturing device 30 based on the data. Manufacturing device 30 manufactures a predetermined product based on a control signal from control device 20. Details of saving device 10, control device 20, and manufacturing device 30 will be described later.

Fig. 2 is a block diagram showing a hardware configuration of a computer system 2000 functioning as control device 20.

As main components, computer system 2000 includes: a CPU (Central Processing Unit) 2010 composed of a control device and an arithmetic device; a mouse 2020 and a keyboard 2030 as input devices for computer system 2000; a RAM (Random Access Memory) 2040 as a main storage device storing data generated by an arithmetic in CPU 2010 and/or data input through the input device described above in a volatile manner; a hard disk 2050 as an auxiliary storage device storing the above data in a nonvolatile manner; a drive device 2060 handling an attachable/detachable removable medium; a monitor 2070 as an output device; and a communication IF 2080 intercommunicating with an external device connected via a communication line. The components are interconnected by a data bus. A corresponding removable medium 2061 is loaded in drive device 2060.

Processing in computer system 2000 is implemented by operation of CPU 2010 and each hardware based on software as a collection of programs as computer instructions. Such software is stored beforehand in hard disk 2050, or may be stored in removable medium 2061 or another storage medium. Alternatively, the software may be provided as a downloadable program product by an information provider connected to the so-called Internet. The software is read from a storage medium by drive device 2060 or another reading device, or downloaded through communication IF 2080, and thereafter stored in hard disk 2050. In operation, the software is read from hard disk 2050 by CPU 2010, and stored in RAM 2040 in the form of an executable program. CPU 2010 performs an arithmetic based on the program.

Each component constituting computer system 2000 shown in the drawing is common. Therefore, it can be said that an essential part of the present invention is software stored in RAM 2040, hard disk 2050, removable medium 2061, or another storage medium, or software which is downloadable through a network. Since operation of each hardware in computer system 2000 is well known, the detailed description thereof will not be repeated.

Instead of hard disk 2050 as an auxiliary storage device storing the data in a nonvolatile manner, a silicon disk or FLASH-SDD (Flash Solid State Drive) composed of a semiconductor storage element may be used.

Removable medium 2061 or another storage medium is not limited to an optical storage medium such as a DVD-ROM (Digital Versatile Disc Read-Only Memory), a CD-ROM (Compact Disk Read-Only Memory), and an optical card, and may be any medium which carries a program in a fixed manner, such as a magnetooptical storage medium such as an MO (Magnetic Optical Disc)/MD (Mini Disc), a magnetic storage medium such as an FD (Flexible Disk), a removable hard disk, a magnetic tape, and a cassette tape, and a semiconductor storage element such as an IC (Integrated Circuit) card, a mask ROM, an EPROM (Electronically Programmable Read-Only Memory), an EEPROM (Electronically Erasable Programmable Read-Only Memory), and a flash memory.

The program here includes not only a program which is directly executable by a CPU, but also a source program-type program, a compressed program, an encrypted program, and the like.

Control device 20 is not limited to computer system 2000 shown in Fig. 2, and may be implemented as a PLC (Programmable Logic Controller).

Since saving device 10 has a configuration similar to that of control device 20 (computer system 2000 shown in Fig. 2), the description of a hardware configuration of saving device 10 will not be repeated. Saving device 10 may have a configuration in which at least one of monitor 2070, drive device 2060, keyboard 2030, and mouse 2020 is omitted.

### <Block of Manufacturing System 1>

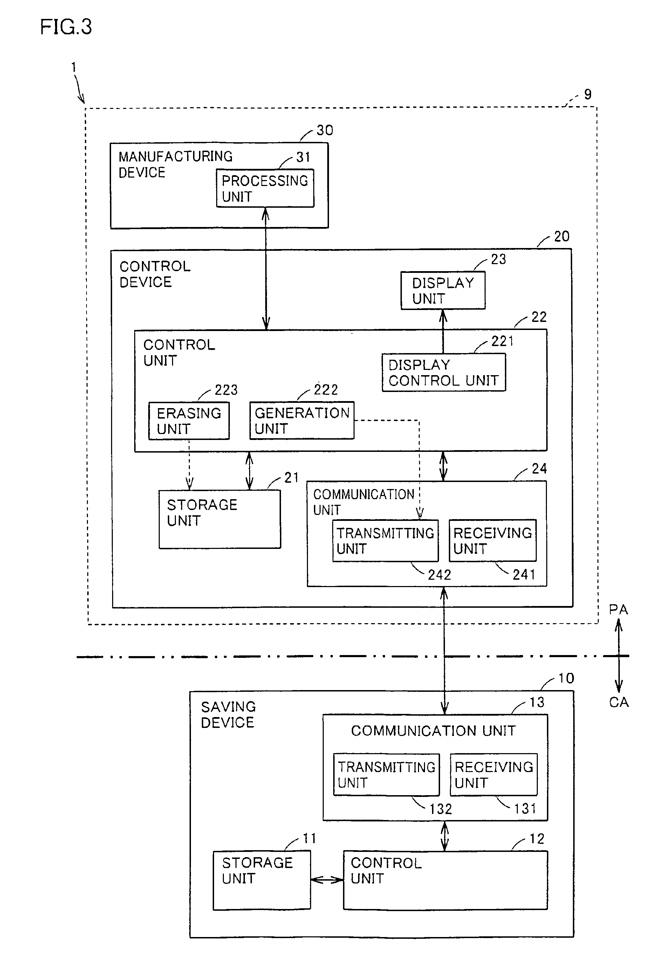

Fig. 3 is a view showing a block of manufacturing system 1. Manufacturing system 1 includes saving device 10 (the information processing device, the first device), control device 20 (the second device), and manufacturing device 30. Configurations of devices 10, 20, and 30 will be described below.

### (Saving Device 10)

Saving device 10 includes a storage unit 11, a control unit 12, and a communication unit 13. Communication unit 13 includes a receiving unit 131 and a transmitting unit 132.

Storage unit 11 is composed of a semiconductor storage element and/or a hard disk. Storage unit 11 stores an operating system and software causing saving device 10 to perform a prescribed operation. Storage unit 11 also stores a manufacturing condition and the like for a product to be manufactured by manufacturing device 30. More specifically, storage unit 11 stores at least information indicating a target value which is a manufacturing condition for the product (i.e., first information). Hereinafter, the information will be referred to as "manufacturing condition data".

Control unit 12 controls operation of saving device 10. For example, control unit 12 reads data stored in storage unit 11, and transmits it to communication unit 13. Further, control unit 12 stores data received through communication unit 13 in storage unit 11.

Communication unit 13 performs data communication with control device 20. Receiving unit 131 receives data transmitted from control device 20. Upon receiving data, receiving unit 131 transmits the data to control unit 12. Transmitting unit 132 transmits data transmitted from control unit 12 to control device 20. It is to be noted that other data to be transmitted and received by communication unit 13 will be described later.

### (Control Device 20)

Control device 20 includes a storage unit 21, a control unit 22, a display unit 23, and a communication unit 24. Control unit 22 includes a display control unit 221, a generation unit 222, and an erasing unit 223. Communication unit 24 includes a receiving unit 241 and a transmitting unit 242.

Storage unit 21 is composed of a semiconductor storage element and/or a hard disk. Storage unit 21 stores an operating system and software causing control device 20 to perform a prescribed operation. Other information to be stored in storage unit 21 will be described later.

Display unit 23 is an image display device such as a liquid crystal display or a CRT (Cathode Ray Tube). Display unit 23 corresponds to monitor 2070 in Fig. 2.

Communication unit 24 performs data communication with saving device 10. Transmitting unit 242 transmits a data signal transmitted from control unit 22 to saving device 10. Receiving unit 241 receives a data signal (for example, the manufacturing condition data) transmitted from saving device 10. Receiving unit 241 transmits the received data signal to control unit 22. It is to be noted that other data to be transmitted and received by communication unit 24 will be described later.

Next, control unit 22 will be described. Control unit 22 controls operation of control device 20 and manufacturing device 30. For example, control unit 22 reads data stored in storage unit 21, and transmits it to communication unit 13. Further, control unit 22 stores data received through communication unit 13 in storage unit 21. In addition, control unit 22 transmits a control signal to manufacturing device 30. Manufacturing device 30 operates based on the control signal.

Display control unit 221 controls display contents on display unit 23. For example, display control unit 221 causes display unit 23 to display process data (second information). The "process data" here is data indicating a measurement value (controlled amount) relative to the above target value obtained when manufacturing device 30 manufactures a product based on the control signal. The process data is numerical information and the like. Control unit 22 stores the process data in storage unit 21.

The following description will be given on the assumption that the process data and/or the manufacturing condition data can be displayed on display unit 23 as long as they are stored in storage unit 21.

Generation unit 222 generates a request signal requesting saving device 10 to transmit the manufacturing condition data. Control unit 22 transmits the request signal generated by generation unit 222 to saving device 10 through communication unit 24. Timing at which generation unit 222 generates the request signal will be described later.

Erasing unit 223 erases the manufacturing condition data stored in storage unit 21. Erasing unit 223 also erases the process data stored in storage unit 21. Timing at which erasing unit 223 erases the manufacturing condition data and timing at which erasing unit 223 erases the process data will be described later.

### (Manufacturing Device 30)

Manufacturing device 30 includes a processing unit 31. Processing unit 31 performs various types of processing for manufacturing a product based on the control signal from control unit 22. Manufacturing device 30 obtains the process data from processing unit 31 at a predetermined interval, and transmits the obtained process data to control device 20.

### <Sequence Chart>

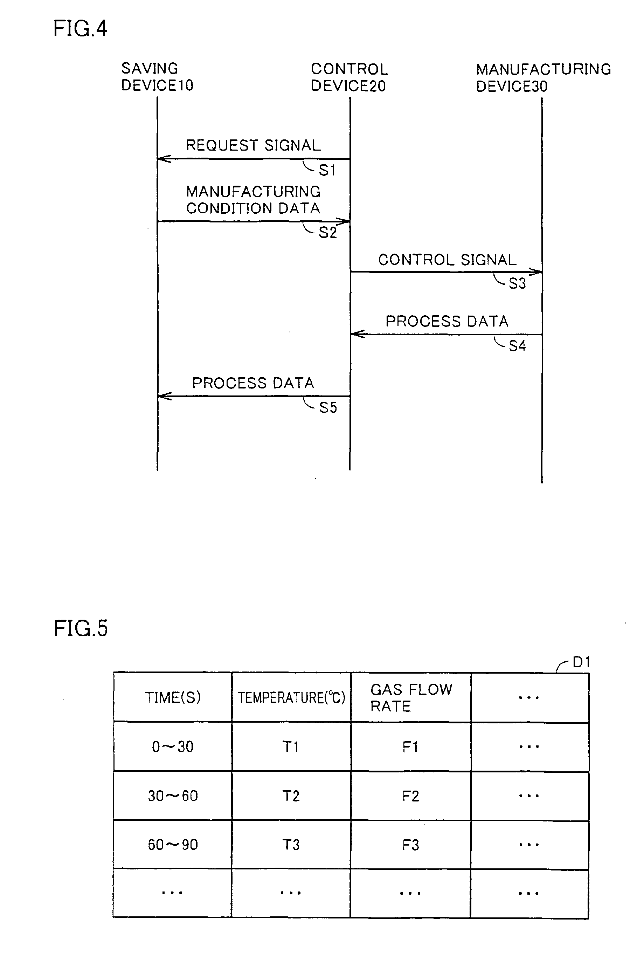

Fig. 4 is a view showing a sequence chart in manufacturing system 1. Referring to Fig. 4, in step S1, control device 20 transmits the request signal to saving device 10. In step S2, saving device 10 transmits the manufacturing condition data to control device 20.

In step S3, control device 20 transmits the control signal to manufacturing device 30. In step S4, manufacturing device 30 transmits the process data to control device 20. In step S5, control device 20 transmits the process data to saving device 10.

### <Data Structure>

Fig. 5 is a view showing an example of a data structure of the manufacturing condition data. Referring to Fig. 5, in manufacturing condition data D1, temperature and gas flow rate are associated corresponding to time. In the example of Fig. 5, it is defined in manufacturing condition data D1 that, for example, in a time period from 0 seconds to 30 seconds, temperature is set to T1 °C and gas flow rate is set to F1.

Values such as T1, T2, T3, F1, F2, and F3 are the target values described above. It is to be noted that the manufacturing condition data is not limited to the data shown in Fig. 5.

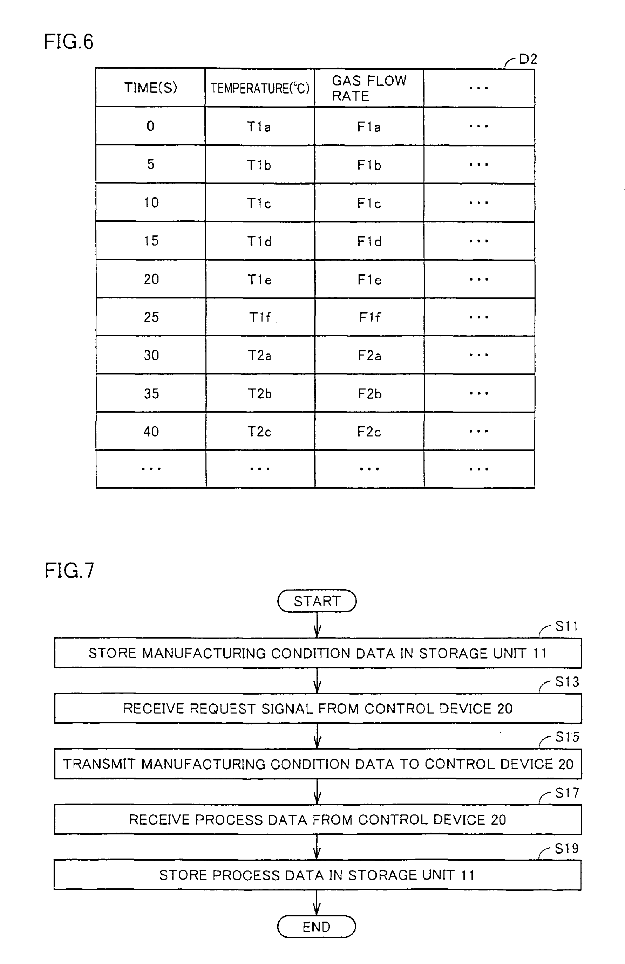

Fig. 6 is a view showing an example of a data structure of the process data. Referring to Fig. 6, in process data D2, temperature and gas flow rate are recorded as measurement values relative to the target values described above, at a predetermined time interval (five seconds in Fig. 5). It is to be noted that the measurement interval is not limited to five seconds. Control device 20 may be configured to perform sampling at an interval shorter than five seconds, or may be configured to perform sampling at an interval longer than five seconds. Further, the process data is not limited to the data shown in Fig. 6.

### <Control Structure>

Next, control structures in devices 10, 20, and 30 constituting manufacturing system 1 will be described. Thereafter, a control structure of manufacturing system 1 will be described.

### (Saving Device 10)

Fig. 7 is a flowchart showing a flow of processing in saving device 10. Referring to Fig. 7, in step S11, saving device 10 stores manufacturing condition data in storage unit 11. Such processing is implemented, for example, by data input to saving device 10 performed by a user of manufacturing system 1.

In step S13, saving device 10 receives the request signal described above from control device 20. In step S 15, based on reception of the request signal, saving device 10 transmits the manufacturing condition data stored in storage unit 11 to control device 20.

In step S 17, saving device 10 receives the process data described above from control device 20. In step S 19, saving device 10 stores the received process data in storage unit 11.

### (Control Device 20)

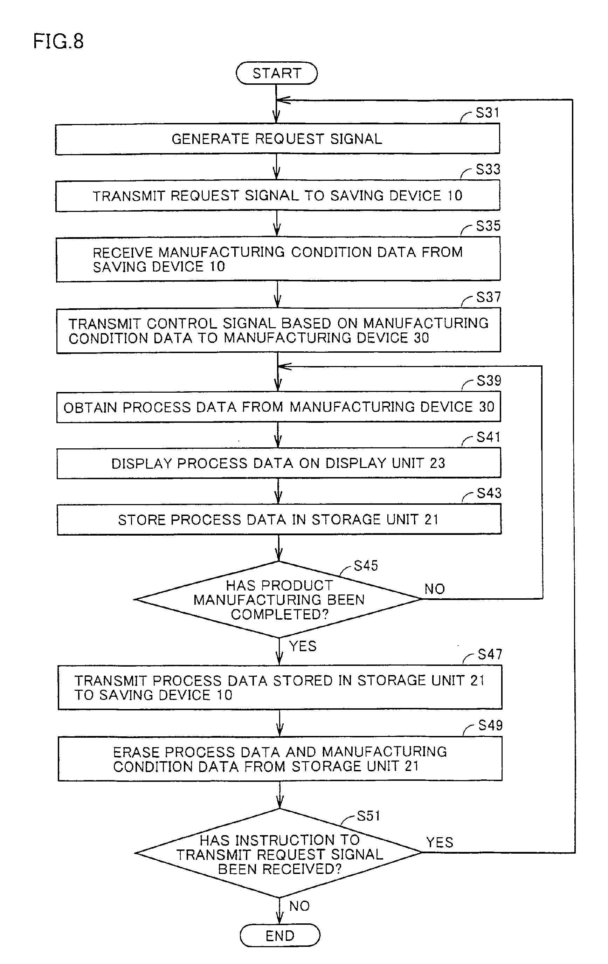

Fig. 8 is a flowchart showing a flow of processing in control device 20. Referring to Fig. 8, in step S31, control device 20 generates the request signal. Generation of the request signal in step S31 is performed, for example, based on an instruction input by the user of manufacturing system 1.

In step S33, control device 20 transmits the generated request signal to saving device 10. In step S35, based on transmission of the request signal, control device 20 receives the manufacturing condition data from saving device 10. In step S37, control device 20 transmits a control signal based on the received manufacturing condition data to manufacturing device 30.

In step S39, based on transmission of the control signal, control device 20 obtains the process data from manufacturing device 30. In step S41, control device 20 displays the process data on display unit 23. In step S43, control device 20 stores the obtained process data in storage unit 21.

In step S45, control device 20 determines whether or not product manufacturing has been completed. For example, control device 20 determines that product manufacturing has been completed, on condition that manufacturing device 30 has manufactured a predetermined number of products. Alternatively, control device 20 determines that product manufacturing has been completed, on condition that a predetermined time has passed. It is to be noted that the criterion indicating completion of product manufacturing is not limited thereto. For example, control device 20 may determine that product manufacturing has been completed, on condition that workpieces to be processed by manufacturing device 30 run out.

If control device 20 determines that product manufacturing has been completed (YES in step S45), in step S47, control device 20 transmits the process data stored in storage unit 21 to saving device 10. In step S49, based on transmission of the process data to saving device 10, control device 20 erases the process data and the manufacturing condition data from storage unit 21. Erasing of the manufacturing condition data only has to be performed based on completion of product manufacturing, and may be performed before control device 20 transmits the process data to saving device 10.

If control device 20 determines that product manufacturing has not been completed (NO in step S45), control device 20 returns the processing to step S39. That is, control device 20 continues obtaining the process data.

In step S51, control device 20 determines whether or not it has received an instruction to transmit a request signal from the user through the input device such as keyboard 2030. If control device 20 determines that it has received the transmission instruction (YES in step S51), control device 20 returns the processing to step S31. If control device 20 determines that it has not received the transmission instruction (NO in step S51), control device 20 terminates a series of processing. After the series of processing is terminated, for example, a maintenance work for manufacturing device 30 is performed by the user.

### (Manufacturing Device 30)

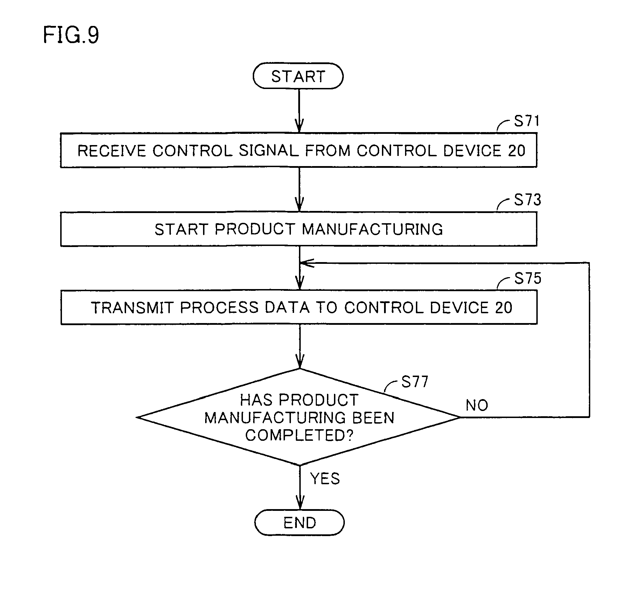

Fig. 9 is a flowchart showing a flow of processing in manufacturing device 30. Referring to Fig. 9, in step S71, manufacturing device 30 receives the control signal from control device 20. In step S73, manufacturing device 30 starts product manufacturing based on the control signal. In step S75, manufacturing device 30 transmits the process data to control device 20.

In step S77, manufacturing device 30 determines whether or not product manufacturing has been completed, based on a control signal from control device 20. For example, when manufacturing device 30 does not receive the control signal even though a certain time has passed since manufacturing device 30 manufactured a product, manufacturing device 30 determines that product manufacturing has been completed. It is to be noted that the criterion for determining that product manufacturing has been completed is not limited thereto.

If manufacturing device 30 determines that product manufacturing has been completed (YES in step S77), manufacturing device 30 terminates a series of processing. If manufacturing device 30 determines that product manufacturing has not been completed (NO in step S77), manufacturing device 30 returns the processing to step S75. That is, manufacturing device 30 continues transmitting the process data to control device 20. More specifically, manufacturing device 30 provides control device 20 with information about temperature and information about gas flow rate at the time of next sampling timing (for example, time t = 40 seconds) constituting the process data in Fig. 6.

### (Manufacturing System 1)

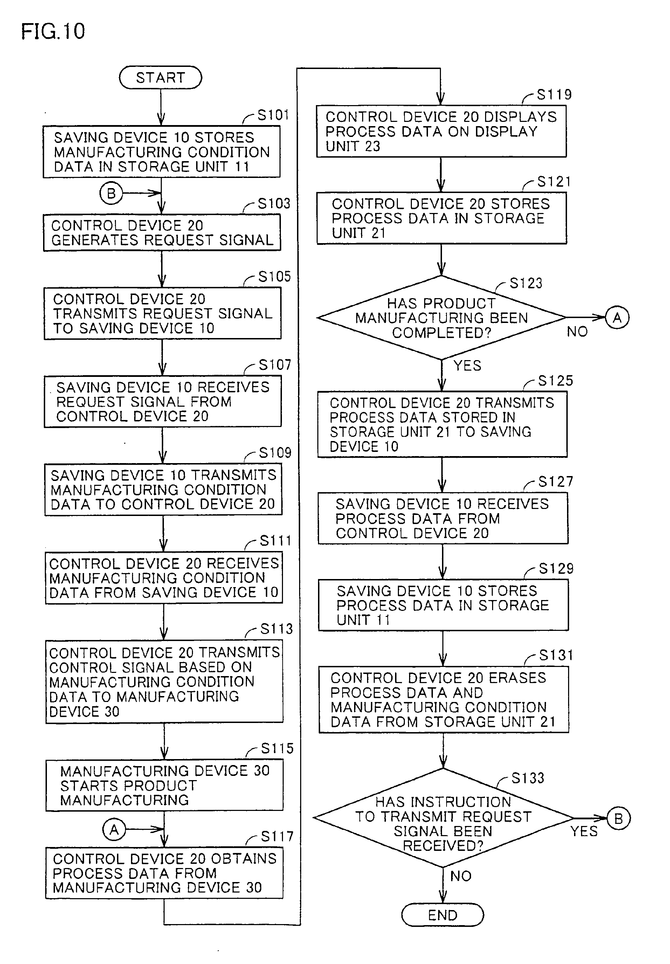

Fig. 10 is a flowchart showing a flow of processing in manufacturing system 1. Referring to Fig. 10, in step S101, saving device 10 stores manufacturing condition data in storage unit 11. In step S103, control device 20 generates a request signal. In step S105, control device 20 transmits the generated request signal to saving device 10.

In step S107, saving device 10 receives the request signal transmitted from control device 20. In step S109, based on reception of the request signal, saving device 10 transmits the manufacturing condition data stored in storage unit 11 to control device 20. In step S111, control device 20 receives the manufacturing condition data transmitted from saving device 10.

In step S113, control device 20 generates a control signal based on the manufacturing condition data, and transmits the generated control signal to manufacturing device 30. In step S115, manufacturing device 30 starts product manufacturing based on the control signal. In step S117, based on start of product manufacturing, control device 20 obtains process data from manufacturing device 30.

In step S119, control device 20 displays the obtained process data on display unit 23. For example, control device 20 displays the obtained process data in chronological order. In step S121, control device 20 stores the process data in storage unit 21.

In step S123, control device 20 determines whether or not product manufacturing has been completed. If control device 20 determines that product manufacturing has been completed (YES in step S123), in step S125, control device 20 transmits the process data stored in storage unit 21 to saving device 10. If control device 20 determines that product manufacturing has not been completed (NO in step S123), control device 20 returns the processing to step S117.

In step S127, saving device 10 receives the process data from control device 20. In step S129, saving device 10 stores the received process data in storage unit 11. In step S 131, control device 20 erases the process data and the manufacturing condition data from storage unit 21.

In step S133, control device 20 determines whether or not it has received an instruction to transmit a request signal from the user through the input device such as, for example, keyboard 2030. If control device 20 determines that it has received the transmission instruction (YES in step S 133), control device 20 returns the processing to step S103. If control device 20 determines that it has not received the transmission instruction (NO in step S133), control device 20 terminates a series of processing. After the series of processing is terminated, for example, a maintenance work for manufacturing device 30 is performed by the user.

In the flowchart shown in Fig. 10, control device 20 generates a request signal (step S103) only when the process data and the manufacturing condition data are erased from storage unit 21 in step S131 and thereafter control device 20 receives an instruction to transmit a request signal in step S 133. However, the configuration of control device 20 is not limited to such a configuration, and control device 20 may be configured such that generation unit 222 generates a request signal based on erasing of the process data and the manufacturing condition data from storage unit 21 (that is, using the erasing as a trigger). In this case, the user can save the effort of repeatedly inputting the transmission instruction to control device 20.

### <Conclusion>

As described above, manufacturing system 1 includes manufacturing device 30 manufacturing a product, control device 20 controlling operation of manufacturing device 30, and saving device 10 capable of communicating with control device 20.

Saving device 10 at least includes storage unit 11 storing manufacturing condition data indicating a target value which is a manufacturing condition for the product. Saving device 10 also includes transmitting unit 132 transmitting the manufacturing condition data stored in storage unit 11 to control device 20. Manufacturing device 30 manufactures the product based on the manufacturing condition data.

Control device 20 includes storage unit 21 storing the manufacturing condition data transmitted from saving device 10 and process data indicating a measurement value relative to the target value obtained when the product is manufactured. Control device 20 also includes erasing unit 223 erasing the manufacturing condition data from storage unit 21 based on manufacturing of the product. Control device 20 further includes transmitting unit 242 transmitting the process data to saving device 10.

Saving device 10 stores the process data transmitted from control device 20 in storage unit 11. Erasing unit 223 of control device 20 erases the process data from storage unit 21 based on transmission of the process data to saving device 10.

Thus, control device 20 controls manufacturing device 30 based on the manufacturing condition data stored in storage unit 21 and causes manufacturing device 30 to manufacture a product, and thereafter erases the manufacturing condition data from storage unit 21. Accordingly, in manufacturing system 1, the manufacturing condition data does not leak from control device 20. Therefore, manufacturing system 1 can prevent leak of information at a higher level, when compared with a configuration in which manufacturing condition data is stored in saving device 10 and control device 20 even after product manufacturing.

If process data is kept stored in storage unit 21 of control device 20 even after product manufacturing has been completed or the like, there is a possibility that a third party other than the user described above may steal a glance at the process data through display unit 23. In addition, the third party can easily assume manufacturing condition data based on the process data.

However, control device 20 erases the process data from storage unit 21 after transmitting the process data to saving device 10. Accordingly, this extremely lowers the possibility that the third party may steal a glance at the process data in control device 20 as described above. Therefore, this can prevent a case where the manufacturing condition data leaks from control device 20.

Since manufacturing system 1 erases the process data and the manufacturing condition data from storage unit 21 as described above, manufacturing system 1 has a security level higher than that of a configuration in which only manufacturing condition data is erased from storage unit 21.

Further, in the present embodiment, saving device 10 is placed in area CA having a security level higher than that of area PA. Therefore, data stored in saving device 10 has higher security than that in a configuration in which saving device 10 is placed in area PA.

Furthermore, since control device 20 is placed in area PA different from the area for saving device 10, an operator who will perform maintenance and inspection of basic system 9 can access storage unit 21 of control device 20 by directly operating control device 20 (i.e. without through a network). Thereby, maintenance and inspection of manufacturing device 30 involving operation of the manufacturing device can be performed using control device 20.

In addition, if storage unit 21 of control device 20 is a volatile storage device, information stored in storage unit 21 is erased when control device 20 is turned off. Therefore, leak of the manufacturing condition data and the process data from storage unit 21 can be prevented more reliably.

Further, when storage unit 11 of saving device 10 is nonvolatile, storage unit 11 can keep storing the manufacturing condition data and the process data even if saving device 10 is turned off.

Preferably, manufacturing system 1 is configured such that the manufacturing condition data and the process data are not stored in a nonvolatile manner outside storage unit 11 (for example, within area PA). Thereby, when manufacturing system 1 is turned off, the manufacturing condition data and the process data are not present outside storage unit 11. Thus, the manufacturing condition data and the process data remain only in storage unit 11 located in area CA having a security level higher than that of area PA. Therefore, manufacturing system 1 can prevent leak of the manufacturing condition data and the process data more reliably.

In addition, as described above, control device 20 erases the manufacturing condition data and the process data, and thereafter generates a request signal requesting transmission of manufacturing condition data of a product to be manufactured subsequently from storage unit 11 of saving device 10 to storage unit 21 of control device 20. Thereby, the manufacturing condition data of the product to be manufactured subsequently is stored again in storage unit 21 of control device 20. Thus, manufacturing system 1 can manufacture products continuously. That is, manufacturing system 1 can repeat product manufacturing.

### [Embodiment 2]

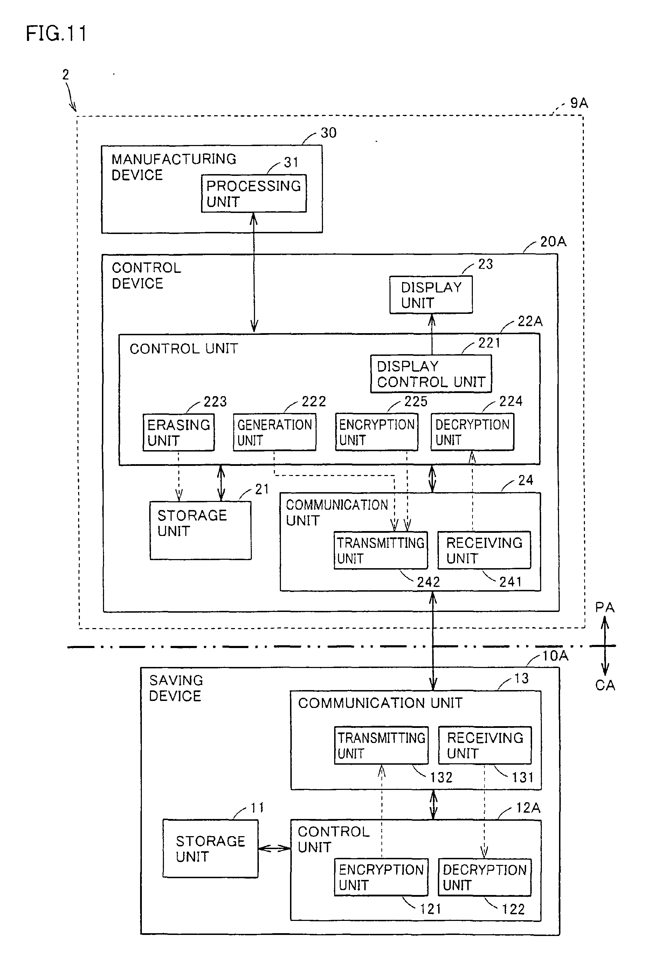

Another embodiment of the manufacturing system in accordance with the present invention will be described below with reference to Figs. 11 to 13. The manufacturing system in accordance with the present embodiment is different from manufacturing system 1 in Embodiment 1 in that data communication between the saving device and the control device is performed with the manufacturing condition data described above and the process data described above being encrypted.

### <Block of Manufacturing System 2>

Fig. 11 is a view showing a block of a manufacturing system 2 in accordance with the present embodiment. Referring to Fig. 11, manufacturing system 2 includes a saving device 10A (information processing device, first device) and a basic system 9A. Basic system 9A includes a control device 20A (second device) and manufacturing device 30.

### (Saving Device 10A)

Saving device 10A includes storage unit 11, a control unit 12A, and communication unit 13. Control unit 12A includes an encryption unit 121 and a decryption unit 122. That is, control unit 12A is different from control unit 12 in Embodiment 1 in that it includes encryption unit 121 and decryption unit 122.

Encryption unit 121 encrypts manufacturing condition data stored in storage unit 11. It is to be noted that storage unit 11 further stores a program for encrypting data by a prescribed method. In encryption, encryption unit 121 encrypts the manufacturing condition data using the program. Alternatively, hardware performing encryption may be used instead of the encryption program described above.

Decryption unit 122 decrypts data transmitted from control device 20A in an encrypted state. Specifically, decryption unit 122 decrypts the process data encrypted in control device 20A. It is to be noted that storage unit 11 further stores a program for decrypting data encrypted by the above prescribed method. In decryption, decryption unit 122 encrypts the manufacturing condition data using the program. Alternatively, hardware performing decryption may be used instead of the decryption program described above.

As described above, saving device 10A transmits the manufacturing condition data in an encrypted state to control device 20A. Further, saving device 10A receives the process data in an encrypted state from control device 20A, and decrypts the received process data.

### (Control Device 20A)

Control device 20A includes storage unit 21, a control unit 22A, display unit 23, and communication unit 24. Control unit 22A includes display control unit 221; generation unit 222, erasing unit 223, a decryption unit 224, and an encryption unit 225. That is, control unit 22A is different from control unit 22 in Embodiment 1 in that it includes decryption unit 224 and encryption unit 225.

Decryption unit 224 decrypts the encrypted manufacturing condition data transmitted from saving device 10A. Control unit 22A controls manufacturing device 30 based on the decrypted manufacturing condition data. It is to be noted that storage unit 21 further stores a program for decrypting data encrypted by the above prescribed method. In decryption, decryption unit 224 decrypts the manufacturing condition data using the program. Alternatively, hardware performing decryption may be used instead of the decryption program described above.

Encryption unit 225 encrypts the process data obtained from manufacturing device 30. Control unit 22A transmits the encrypted process data to saving device 10A through communication unit 24. It is to be noted that storage unit 21 further stores a program for encrypting data by the prescribed method. In encryption, encryption unit 225 encrypts the process data using the program. Alternatively, hardware performing encryption may be used instead of the encryption program described above.

As described above, control device 20A receives the manufacturing condition data in an encrypted state from saving device 10A, and decrypts the received manufacturing condition data. Further, control device 20A transmits the process data in an encrypted state to saving device 10A.

### <Control Structure>

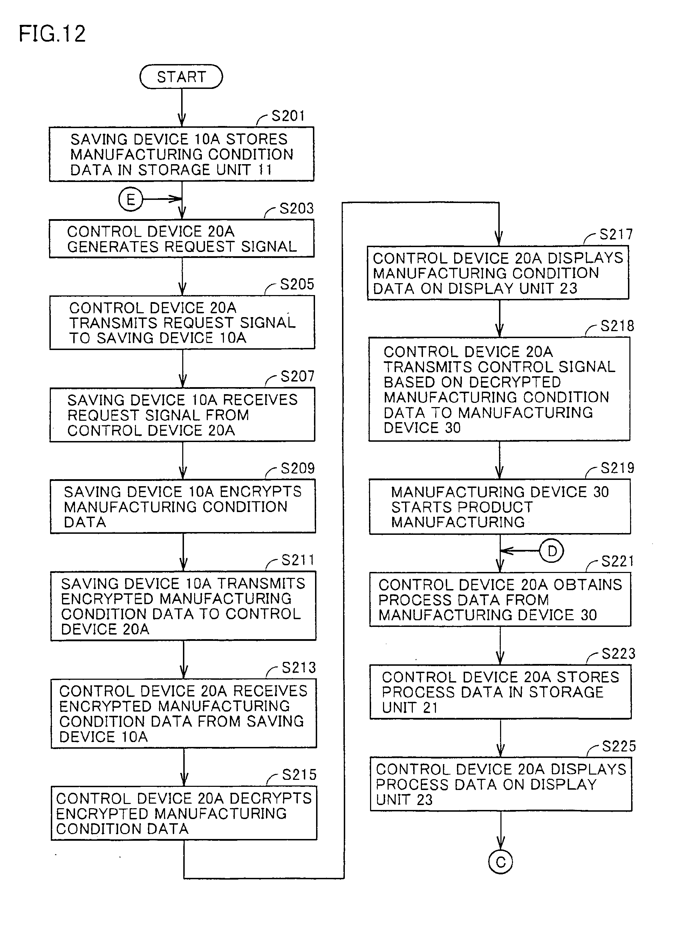

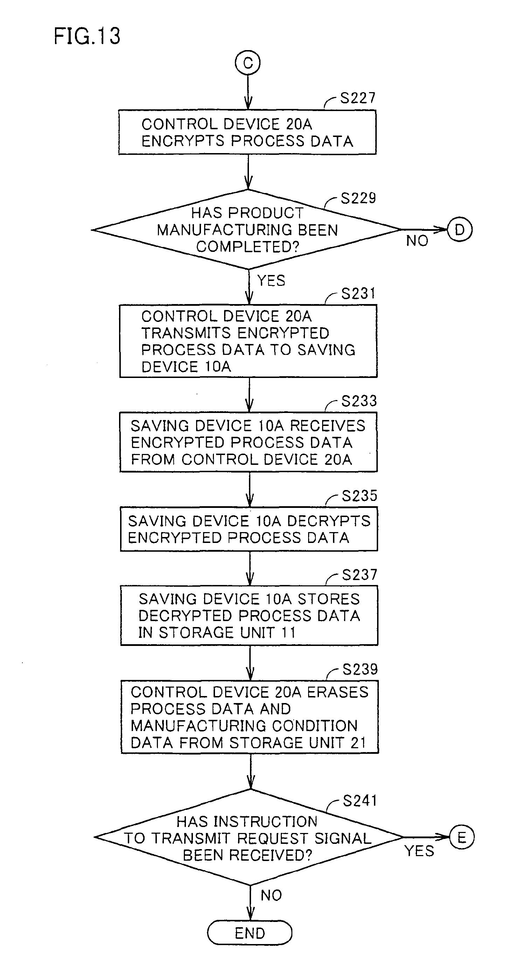

Fig. 12 is a flowchart showing the first half of a flow of processing in manufacturing system 2. Fig. 13 is a flowchart showing the second half of the flow of processing in manufacturing system 2.

Referring to Fig. 12, in step S201, saving device 10A stores manufacturing condition data in storage unit 11. In step S203, control device 20A generates a request signal. In step S205, control device 20A transmits the generated request signal to saving device 10A.

In step S207, saving device 10A receives the request signal transmitted from control device 20A. In step S209, saving device 10A encrypts the manufacturing condition data stored in storage unit 11. In step S211, based on reception of the request signal, saving device 10A transmits the encrypted manufacturing condition data to control device 20A. In step S213, control device 20A receives the encrypted manufacturing condition data transmitted from saving device 10A. In step S215, control device 20A decrypts the encrypted manufacturing condition data. The decrypted manufacturing condition data is stored in storage unit 21.

It is to be noted that control device 20A may be configured to temporarily store the encrypted manufacturing condition data in storage unit 21, thereafter read the manufacturing condition data from storage unit 21, and decrypt the read manufacturing condition data.

In step S217, control device 20A displays the manufacturing condition data on display unit 23. In step S218, control device 20A generates a control signal based on the decrypted manufacturing condition data, and transmits the generated control signal to manufacturing device 30. In step S219, manufacturing device 30 starts product manufacturing based on the control signal. In step S221, based on start of product manufacturing, control device 20A obtains process data from manufacturing device 30.

In step S223, control device 20A stores the process data in storage unit 21. In step S225, control device 20A displays the obtained process data on display unit 23. For example, control device 20A displays the obtained process data in chronological order.

Referring to Fig. 13, in step S227, control device 20A reads the process data stored in storage unit 21, and encrypts the read process data. In step S229, control device 20A determines whether or not product manufacturing has been completed. If control device 20A determines that product manufacturing has been completed (YES in step S229), in step S231, control device 20A transmits the encrypted process data to saving device 10A. If control device 20A determines that product manufacturing has not been completed (NO in step S229), control device 20A returns the processing to step S221.

In step S233, saving device 10A receives the encrypted process data from control device 20A. In step S235, saving device 10A decrypts the encrypted process data. In step S237, saving device 10A stores the decrypted process data in storage unit 11.

It is to be noted that saving device 10A may be configured to temporarily store the encrypted process data in storage unit 11, thereafter read the process data from storage unit 11, and decrypt the read process data.

In step S239, control device 20A erases the process data and the manufacturing condition data from storage unit 21. As described in Embodiment 1, erasing of the manufacturing condition data only has to be performed based on completion of product manufacturing, and may be performed before control device 20A transmits the process data to saving device 10.

In step S241, control device 20A determines whether or not it has received an instruction to transmit a request signal from the user through the input device such as, for example, keyboard 2030. If control device 20A determines that it has received the transmission instruction (YES in step S241), control device 20A returns the processing to step S203. If control device 20A determines that it has not received the transmission instruction (NO in step S241), control device 20A terminates a series of processing. After the series of processing is terminated, for example, a maintenance work for manufacturing device 30 is performed by the user.

### <Conclusion>

As described above, in manufacturing system 2, saving device 10A includes encryption unit 121 encrypting the manufacturing condition data. Further, transmitting unit 132 of saving device 10A transmits the manufacturing condition data in an encrypted state to control device 20A. Control device 20A includes decryption unit 224 decrypting the encrypted manufacturing condition data. Control device 20A stores the manufacturing condition data decrypted by decryption unit 224 in storage unit 21.

Therefore, in manufacturing system 2, the manufacturing condition data is communicated in an encrypted state between saving device 10A and control device 20A. Thus, even in a case where the third party installs a communication line branching from a communication line connecting saving device 10A and control device 20A such that they can communicate with each other, it is difficult for the third party to check the contents of the manufacturing condition data. Since the manufacturing condition data is communicated in an encrypted state between saving device 10A and control device 20A in this manner, manufacturing system 2 has a security level higher than that of manufacturing system 1 in Embodiment 1.

Further, since the manufacturing condition data is decrypted in control device 20A, the possibility of leak of the decrypted manufacturing condition data from the above communication line installed by the third party is reduced.

In addition, as described above, in manufacturing system 2, control device 20A includes encryption unit 225 encrypting the process data. Transmitting unit 242 of control device 20A transmits the process data in an encrypted state to saving device 10A. Saving device 10A includes decryption unit 122 decrypting the encrypted process data. Saving device 10A stores the process data decrypted by decryption unit 122 in storage unit 11.

Therefore, in manufacturing system 2, the process data is communicated in an encrypted state between saving device 10A and control device 20A. Thus, even in a case where the third party installs a communication line branching from the communication line connecting saving device 10A and control device 20A such that they can communicate with each other, it is difficult for the third party to check the contents of the process data. Since the process data is communicated in an encrypted state between saving device 10A and control device 20A in this manner, manufacturing system 2 has a security level higher than that of manufacturing system 1 in Embodiment 1.

Further, since the process data is decrypted in control device 20A, the possibility of leak of the decrypted process data from the above communication line installed by the third party is reduced.

### <Modification>

Although saving device 10A in the above description stores the manufacturing condition data not in an encrypted state in storage unit 11, saving device 10A may store the manufacturing condition data in an encrypted state in storage unit 11. In the case of storing the manufacturing condition data in an encrypted state in storage unit 11 as described above, an improved security level can be achieved, when compared with the case of storing it not in an encrypted state.

Further, although control device 20A stores the process data not in an encrypted state in storage unit 21, control device 20A may store the process data in an encrypted state in storage unit 21. In the case of storing the process data in an encrypted state in storage unit 21 as described above, an improved security level can be achieved, when compared with the case of storing it not in an encrypted state.

### [Embodiment 3]

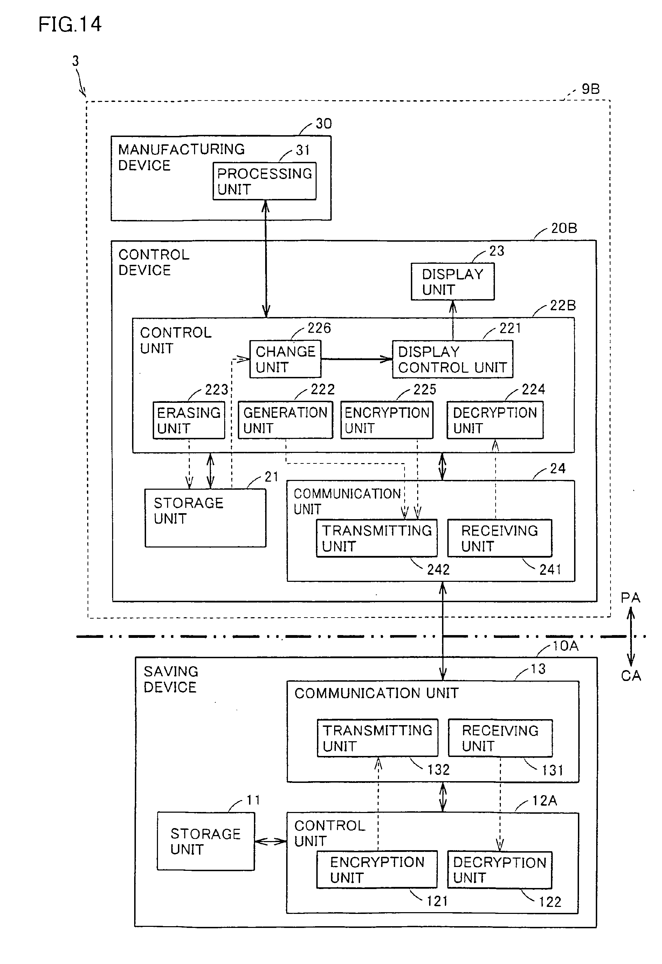

Another embodiment of the manufacturing system in accordance with the present invention will be described below with reference to Figs. 14 to 16. The manufacturing system in accordance with the present embodiment is different from manufacturing system 2 in Embodiment 2 in the form of displaying the process data on display unit 23.

### <Block of Manufacturing System 3>

Fig. 14 is a view showing a block of a manufacturing system 3 in accordance with the present embodiment. Referring to Fig. 14, manufacturing system 3 includes saving device 10A (the information processing device, the first device) and a basic system 9B. Basic system 9B includes a control device 20B (second device) and manufacturing device 30.

### (Control Device 20B)

Control device 20B includes storage unit 21, a control unit 22B, display unit 23, and communication unit 24. Control unit 22B includes display control unit 221, generation unit 222, erasing unit 223, decryption unit 224, encryption unit 225, and a change unit 226. That is, control unit 22B is different from control unit 22A in Embodiment 2 in that it includes change unit 226.

When change unit 226 receives an instruction to cause display unit 23 to display process data, for example from the user through the input device such as keyboard 2030, change unit 226 reads the process data from storage unit 21, and changes the read process data to relative values. Specifically, based on reference values stored beforehand in storage unit 21, change unit 226 calculates how many times or what percentage of the reference values are the values of the process data as numerical information. Then, change unit 226 transmits the calculated values (i.e., the relative values) to display control unit 221. Display control unit 221 causes display unit 23 to display the contents based on the calculated relative values. It is to be noted that the reference values are values kept secret from the third party.

Further, control device 20B may be configured such that, in the course of product manufacturing, change unit 226 reads the process data from storage unit 21 and display control unit 221 causes display unit 23 to display the relative values, without receiving an instruction from the user through the input device.

In addition, when change unit 226 receives an instruction to cause display unit 23 to display manufacturing condition data from the user through the input device such as keyboard 2030, change unit 226 reads the manufacturing condition data from storage unit 21, and changes the read manufacturing condition data to relative values. Specifically, based on the reference values described above, change unit 226 calculates how many times or what percentage of the reference values are values of the manufacturing condition data as numerical information. Then, change unit 226 transmits the calculated values (i.e., the relative values) to display control unit 221. Display control unit 221 causes display unit 23 to display the contents based on the calculated relative values.

Although the case where control device 20B changes the manufacturing condition data and the process data to relative values has been described above as an example, control device 20B may be configured to change the manufacturing condition data and the process data to dummy data. Specifically, change unit 226 changes, for example, a numerical value (the manufacturing condition data, the process data) to alphabetical characters in accordance with a rule defined by a program for changing display stored beforehand in storage unit 21. Alternatively, change unit 226 changes the numerical value to a numerical value which is not a relative value in accordance with a rule defined by the program. For example, change unit 226 changes the numerical value by adding a prescribed value thereto, or the like. The above description is an example of numerical data, and other data can also be changed to display which does not allow the third party to easily assume the contents of the manufacturing condition data and/or the process data.

### <Control Structure>

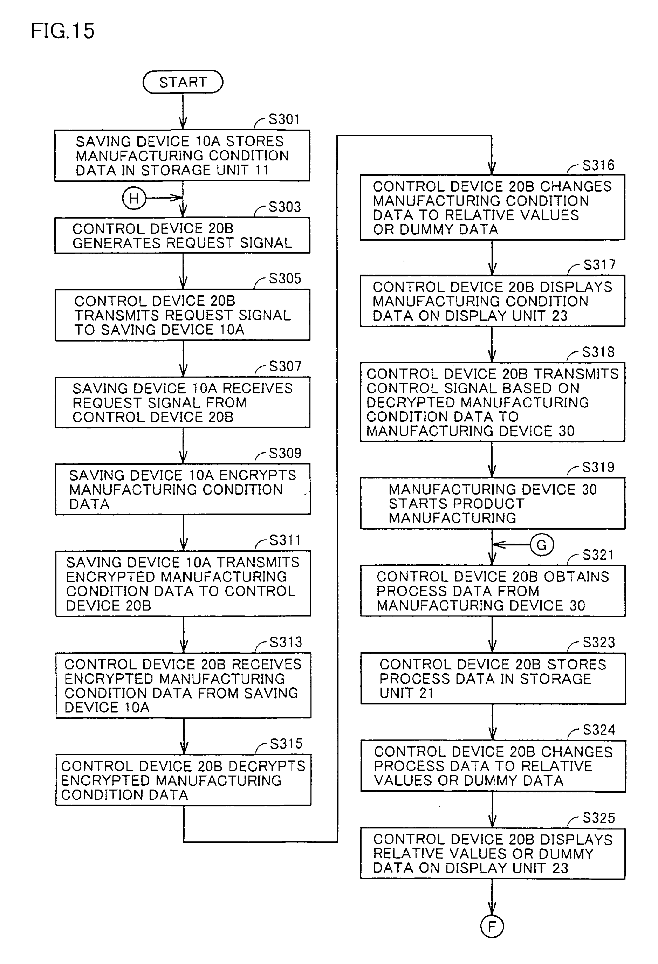

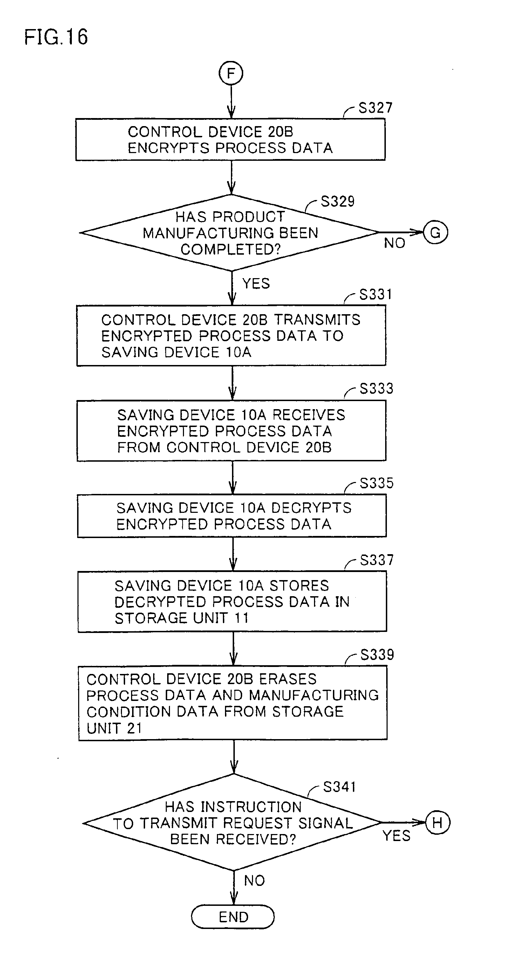

Fig. 15 is a flowchart showing the first half of a flow of processing in manufacturing system 3. Fig. 16 is a flowchart showing the second half of the flow of processing in manufacturing system 3. Figs. 15 and 16 are flowcharts when the above change processing is performed on the process data.

Firstly, differences between steps S301 to S325 shown in Fig. 15 and steps S201 to S225 shown in Fig. 12 in Embodiment 2 will be described. Referring to Figs. 15 and 12, the first difference is that the control devices have different reference signs (i.e., signs indicating members in the drawings (for example, numbers)). The second difference is that Fig. 15 includes step S316. The third difference is that Fig. 15 includes step S324 and step S325 instead of step S225 shown in Fig. 12. As for the rest, Figs. 15 and 12 are identical.

Accordingly, the description of the contents of processing in steps S301 to S321 and S325 in Fig. 15 will not be repeated here, except for a portion thereof. Of the steps in Fig. 15 and the steps in Fig. 12, the steps with step numbers (such as "301 ", "303", "201", and "203") having the same last two digits (such as "01" and "03") correspond to each other.

In step S316, control device 20B changes the manufacturing condition data to relative values or dummy data. In step S317, control device 20B displays the relative values or the dummy data.

In step S324, control device 20B changes the process data to relative values or dummy data. Then, in step S325, control device 20B displays the relative values or the dummy data on display unit 23.

Referring to Figs. 16 and 13, the difference between steps S327 to S341 shown in Fig. 16 and steps S227 to S241 shown in Fig. 13 in Embodiment 2 is that the control devices have different reference signs. Accordingly, the description of the contents of processing in steps S327 to S341 in Fig. 16 will not be repeated here. Of the steps in Fig. 16 and the steps in Fig. 13, the steps with step numbers (such as 327, 329, 227, and 229) having the same last two digits (such as 27 and 29) correspond to each other.

Although the case where control device 20B changes the manufacturing condition data and the process data to relative values has been described above, control device 20B may be configured to change either one of the manufacturing condition data and the process data to relative values.

### <Conclusion>

As described above, control device 20B includes change unit 226 changing the manufacturing condition data and/or the process data to relative values or dummy data. Further, display control unit 221 causes display unit 23 to display the values after change (relative values) or the data after change (dummy data).

In this manner, control device 20B is configured to display relative values or dummy data on display unit 23, instead of displaying the manufacturing condition data itself and/or the process data itself. Accordingly, even if the third party steals a glance at the relative values or the dummy data displayed on the display unit, for example, during product manufacturing, the third party cannot obtain the manufacturing condition data itself and/or the process data itself. Therefore, manufacturing system 3 has a security level higher than that of manufacturing system 2 in Embodiment 2.

### [Embodiment 4]

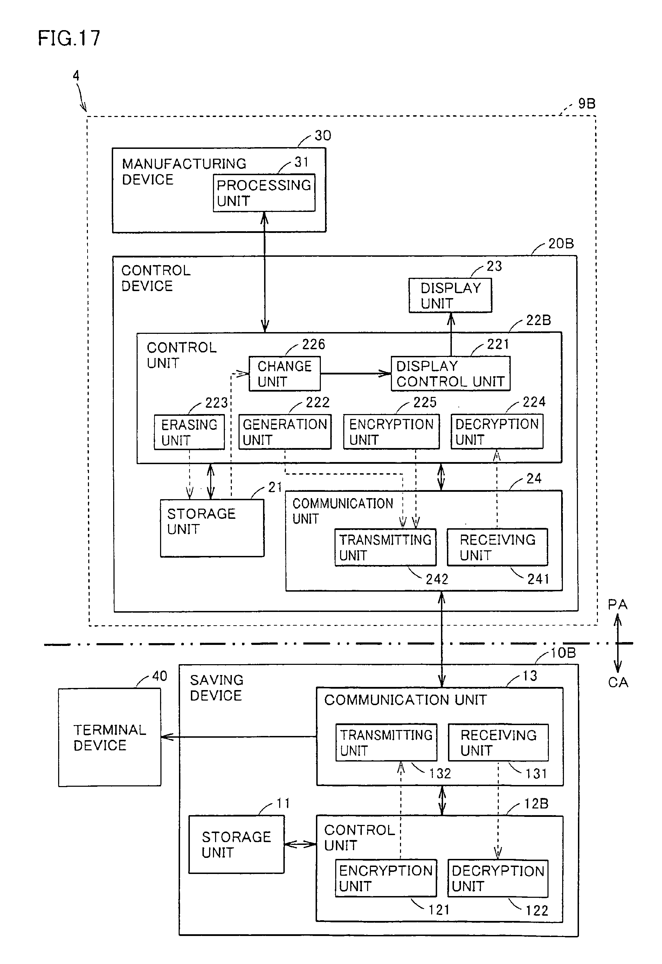

Another embodiment of the manufacturing system in accordance with the present invention will be described below with reference to Figs. 17 to 19. The manufacturing system in accordance with the present embodiment is different from manufacturing system 3 in Embodiment 3 in that it includes a server device.

### <Block of Manufacturing System 4>

Fig. 17 is a view showing a block of a manufacturing system 4 in accordance with the present embodiment. Referring to Fig. 17, manufacturing system 4 includes a saving device 10B (information processing device, first device), basic system 9B, and a terminal device (third device) 40. Terminal device 40 is placed in area CA, as with saving device 10B.

### (Saving Device 10B)

Saving device 10B includes storage unit 11, a control unit 12B, and communication unit 13. Hereinafter, it is assumed that saving device 10B stores manufacturing condition data in an encrypted state in storage unit 11. It is also assumed that saving device 10B stores process data received from control device 20B (the second device) in an encrypted state in storage unit 11.

In addition to the functions of control unit 12A (see Fig. 14) in Embodiment 3, control unit 12B has a function of performing data communication with terminal device 40 through communication unit 13. For example, when saving device 10B receives a predetermined instruction, control unit 12B reads the manufacturing condition data in an encrypted state and the process data in an encrypted state which are stored in storage unit 11, from storage unit 11.

Further, decryption unit 122 of control unit 12B decrypts the read manufacturing condition data in an encrypted state and manufacturing condition data in an encrypted state. Then, transmitting unit 132 transmits the decrypted manufacturing condition data and the decrypted process data to terminal device 40 under the control of control unit 12B.

### (Terminal Device 40)

Terminal device 40 is an operation terminal used by the operator for decrypting data saved in an encrypted state in saving device 10B and referring to and/or utilizing the data.

Terminal device 40 includes a storage unit (not shown) storing data. Terminal device 40 stores the decrypted manufacturing condition data and process data transmitted from saving device 10B in the storage unit.

With such a configuration, the operator can refer to and/or utilize the decrypted manufacturing condition data and/or process data.

Preferably, terminal device 40 is configured such that data temporarily saved in a decrypted state in a storage device (such as a hard disk) in terminal device 40 is retransmitted to saving device 10B after the operator finishes an operation, and erased without being left in terminal device 40. More preferably, a security lock such as a password and an authentication card is provided to allow only selected people to use terminal device 40.

### <Control Structure>

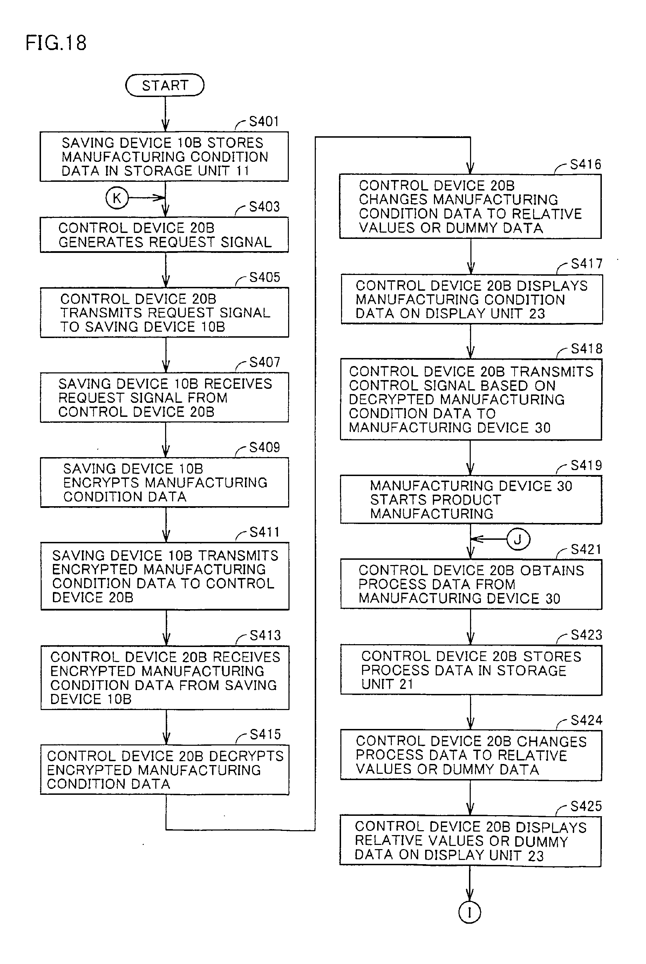

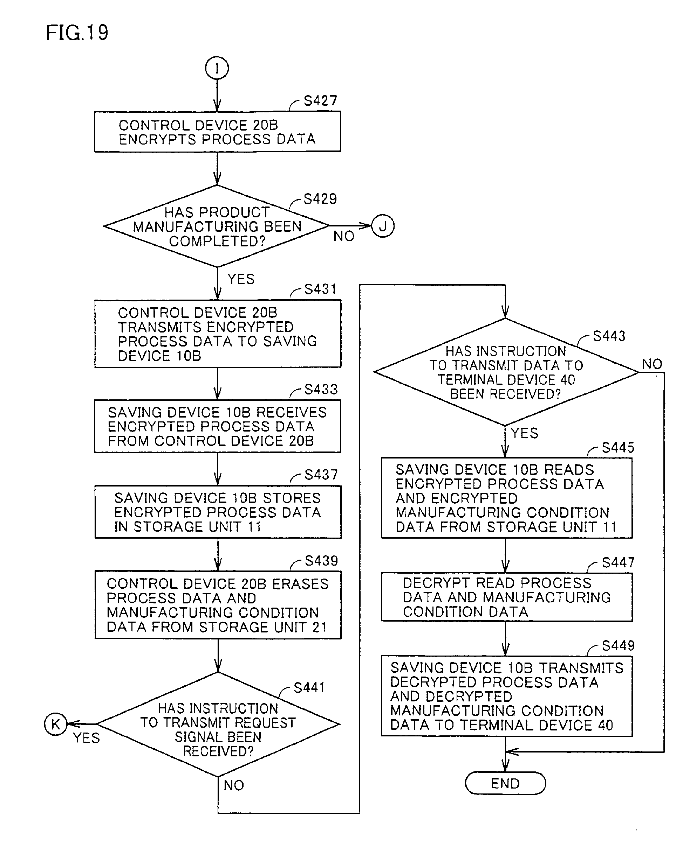

Fig. 18 is a flowchart showing the first half of a flow of processing in manufacturing system 4. Fig. 19 is a flowchart showing the second half of the flow of processing in manufacturing system 4. As with Figs. 15 and 16 in Embodiment 3, Figs. 18 and 19 are flowcharts when the above change processing is performed on the process data.

Firstly, the difference between steps S401 to S425 shown in Fig. 18 and steps S301 to S325 shown in Fig. 15 in Embodiment 3 is that the saving devices have different reference signs. Accordingly, the description of the contents of processing in steps S401 to S425 in Fig. 18 will not be repeated here. Of the steps in Fig. 18 and the steps in Fig. 15, the steps with step numbers (such as 401, 403, 301, and 303) having the same last two digits (such as 01 and 03) correspond to each other.

Next, differences between steps S427 to S447 shown in Fig. 19 and steps 5327 to S341 shown in Fig. 16 in Embodiment 3 will be described. Referring to Figs. 19 and 16, the first difference is that the saving devices have different part numbers. The second difference is that Fig. 19 does not include a step corresponding to step S335 in Fig. 16. The third difference is that Fig. 19 includes step S437 instead of step S337 in Fig. 16. The fourth difference is that Fig. 19 newly includes steps indicated as steps S443 to 449.

Accordingly, the description of the contents of processing in steps S427 to S433, S439, and S441 in Fig. 19 will not be repeated here. Of the steps in Fig. 19 and the steps in Fig. 16, the steps with step numbers having the same last two digits correspond to each other.

In step 5437, saving device 10B stores the encrypted process data in storage unit 11. In step S443, saving device 10B determines whether or not it has received an instruction to transmit data to terminal device 40 as the predetermined instruction. If saving device 10B determines that it has received the above instruction (YES in step S443), in step S445, saving device 10B reads the encrypted process data and the encrypted manufacturing condition data from storage unit 11. If saving device 10B determines that it has not received the above instruction (NO in step S443), saving device 10B terminates processing.

In step S447, saving device 10B decrypts the read process data and manufacturing condition data. In step S449, saving device 10B transmits the decrypted process data and the decrypted manufacturing condition data to terminal device 40. Terminal device 40 stores the process data and the manufacturing condition data in the storage unit of terminal device 40.

### <Conclusion>

As described above, in manufacturing system 4, the manufacturing condition data and the process data are stored in an encrypted state in storage unit 11 of saving device 10B. Transmitting unit 132 of saving device 10B transmits the manufacturing condition data and the process data in an encrypted state which are stored in storage unit 11, each in a decrypted state, to terminal device 40 placed in area CA as with saving device 10B.

Accordingly, the manufacturing condition data and the process data can be stored in an encrypted state in saving device 10B, whereas the manufacturing condition data and the process data can be stored in a decrypted state in terminal device 40.

Thus, the operator can refer to and/or utilize the manufacturing condition data and/or the process data in a decrypted state in terminal device 40.

### [Embodiment 5]

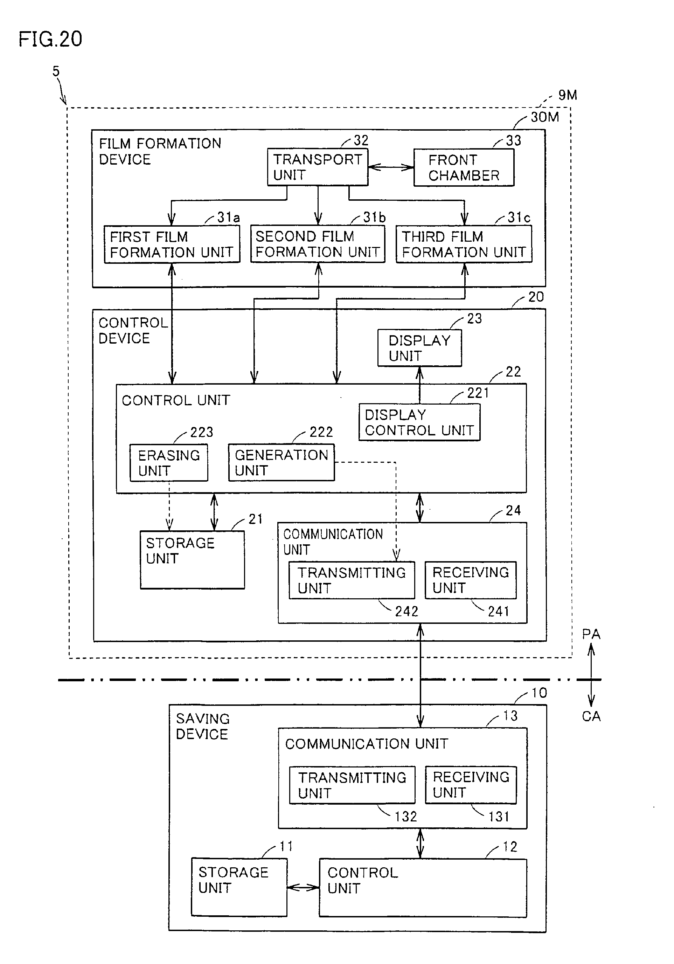

Another embodiment of the manufacturing system in accordance with the present invention will be described below with reference to Figs. 20 to 25. The manufacturing system in accordance with the present embodiment is an example in which manufacturing system 1 in Embodiment 1 is applied to manufacturing of a thin film for a semiconductor.

### <Block of Film Formation Manufacturing System 5>

Fig. 20 is a view showing a block of a film formation manufacturing system 5 in accordance with the present embodiment. Referring to Fig. 20, film formation manufacturing system 5 includes saving device 10 (the information processing device, the first device) and a film formation basic system 9M. Film formation basic system 9M includes a film formation device 30M and control device 20 (the second device). Saving device 10 is placed in area CA. Film formation basic system 9M is placed in area PA.

### (Film Formation Device 30M)

Film formation device 30M is a CVD (Chemical Vapor Deposition) device having a plurality of film formation chambers. Film formation device 30M includes a first film formation unit 31a, a second film formation unit 31b, a third film formation unit 31c, a transport unit 32, and a front chamber 33. That is, film formation device 30M is different from manufacturing device 30 in Embodiment 1 in that it includes a plurality of processing units (i.e., the first film formation unit 31a, the second film formation unit 31b, and the third film formation unit 31 c). It is to be noted that each of film formation units 31 a, 31b, and 31 c includes a film formation chamber and an internal structure thereof.

Each of the first film formation unit 31a, the second film formation unit 31b, and the third film formation unit 31 c forms a film on a substrate. Operation of film formation units 31a, 31b, and 31c is controlled by control device 20. That is, in the present embodiment, control device 20 controls operation of the plurality of processing units. Hereinafter, for convenience of description, it is assumed that manufacturing condition data on which a control signal for controlling each of film formation units 31a, 31b, and 31c is based is not identical for each of film formation units 31a, 31b, and 31c. Namely, it is assumed that three manufacturing condition data are stored in storage unit 21 of control device 20.

Transport unit 32 transports a substrate between each of film formation units 31a, 31b, and 31 c and front chamber 33. Operation of transport unit 32 is controlled by control unit 22 of control device 20.

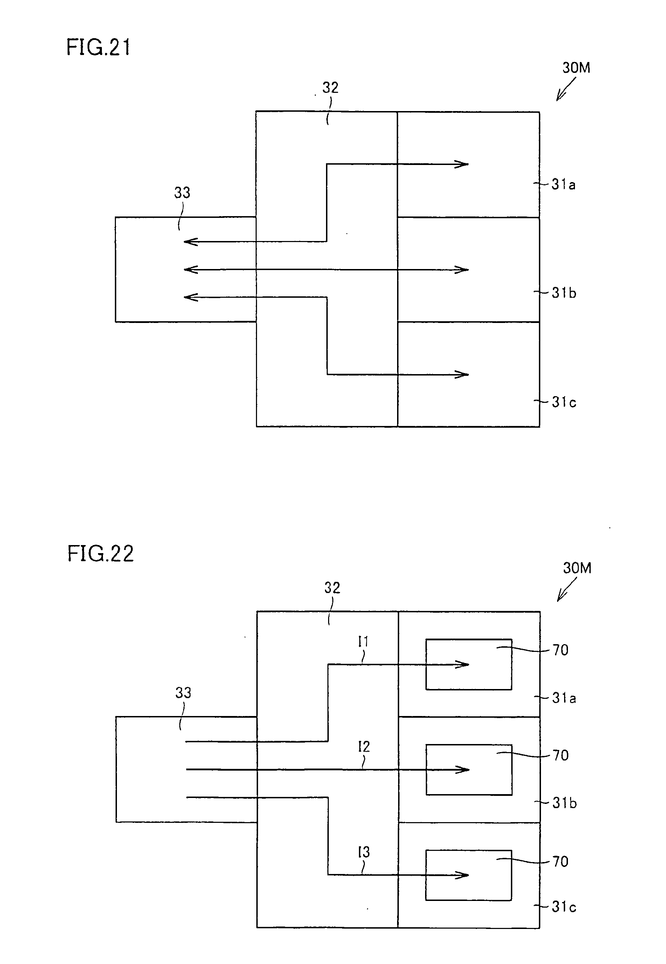

Fig. 21 is a view indicating directions in which substrates are moved. Referring to Fig. 21, transport unit 32 transports substrates between film formation units 31 a, 31 b, and 31 c and front chamber 33, in directions indicated by arrows.

Fig. 22 is a view showing the state of film formation device 30M after substrates 70 are moved from front chamber 33 to film formation units 31a, 31b, and 31c. Substrates 70 are moved by transport unit 32 to film formation units 31a, 31b, and 31c through paths I1, I2, and I3, respectively.

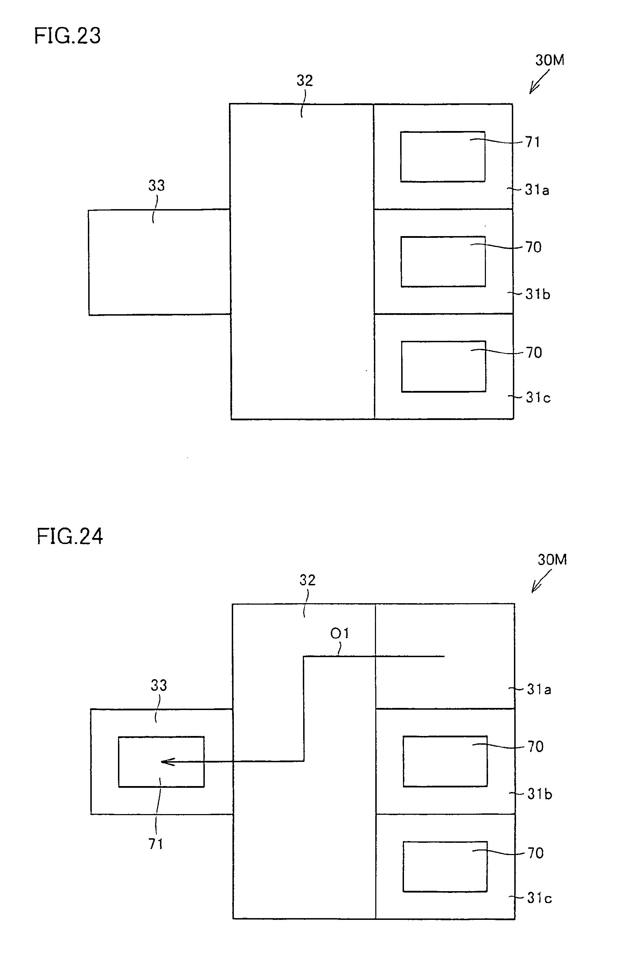

Fig. 23 is a view showing the state where film formation processing is performed on substrates 70. Timing at which film formation is finished is not necessarily identical among film formation units 31 a, 31b, and 31 c. For example, at certain timing, film formation is finished in the first film formation unit 31a only. Namely, a film-formed substrate (i.e., a product) is obtained in the first film formation unit 31a.

Fig. 24 is a view showing the state of film formation device 30M after a film-formed substrate 71 is transported from the first film formation unit 31a to front chamber 33.

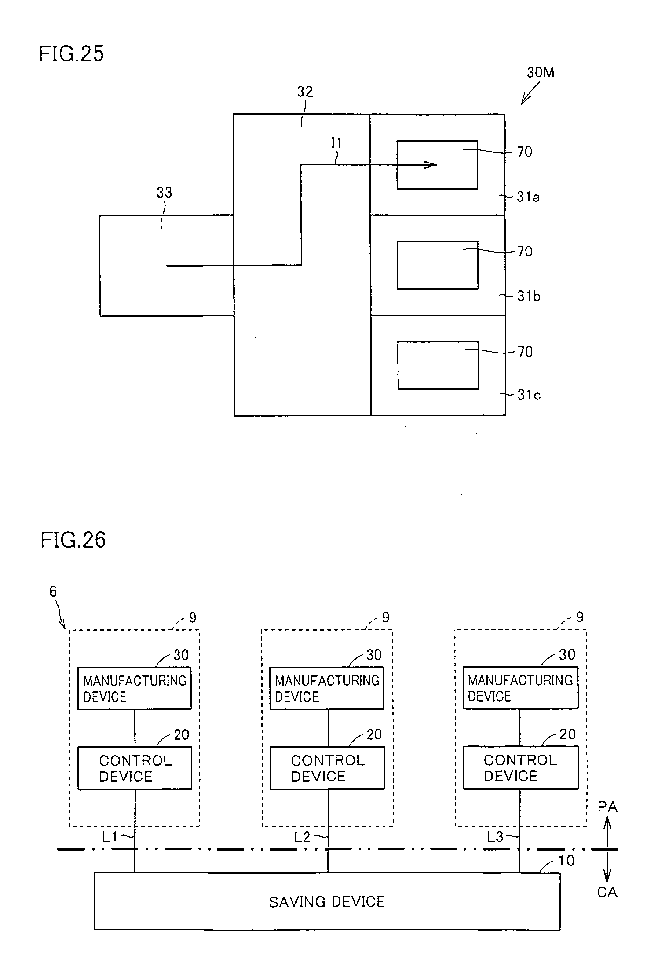

Fig. 25 is a view showing the state of film formation device 30M after transport unit 32 transports new substrate 70 from front chamber 33 to the first film formation unit 31a. Referring to Fig. 25, whenever product manufacturing is finished in one film formation unit, film formation device 30M transports a new substrate to the film formation unit.

Whenever product manufacturing is finished in either one of film formation units 31a, 31b, and 31 c, control device 20 erases manufacturing condition data corresponding to the film formation unit in which product manufacturing is finished stored in storage unit 21. That is, control device 20 temporarily erases manufacturing condition data used in the film formation unit in which product manufacturing is finished, from storage unit 21. Further, when a product is to be newly manufactured in the film formation unit, control device 20 obtains the manufacturing condition data from saving device 10.

Obtaining of the manufacturing condition data will be described below in more detail. Control device 20 includes information for specifying either one of the plurality of film formation units 31a, 31 b, and 31c in the above request signal to be transmitted to obtain the manufacturing condition data from saving device 10. Saving device 10 reads manufacturing condition data based on that information from storage unit 11, from among a plurality of manufacturing condition data. Thereafter, saving device 10 transmits the read manufacturing condition data to control device 20.

As described above, in film formation manufacturing system 5, since a specific one of the manufacturing condition data (film formation conditions) used for film formation units 31a to 31c is selectively transmitted to control device 20, the film formation condition suitable for each of film formation units 31a to 31c can be used.

Further, in film formation manufacturing system 5, a specific one of the film formation conditions used for film formation units 31a to 31c is selectively erased. Thus, of the film formation conditions, those being used for control are not erased. This can avoid occurrence of a trouble in film formation due to erasing of the film formation conditions.

In addition, process data of each of film formation units 31a to 31c is saved in storage unit 21. On this occasion, third information for specifying in which of the plurality of film formation units 31a, 31b, and 31c processing has been performed is added to each process data. Upon completion of each manufacturing processing, the process data including the third information is transmitted to the saving device, and erased from storage unit 21 after transmission.

Further, film formation manufacturing system 5 may be configured such that the request signal does not include information for specifying either one of the plurality of film formation units 31 a, 31b, and 31c, and the control unit selects one of the plurality of film formation units for processing after the plurality of manufacturing condition data are transmitted to the control device. On this occasion, the request signal does not include the third information, but the process data includes the third information.

Although the film formation manufacturing system has been described as an example of the manufacturing system in the present embodiment, the present invention is not limited thereto, and the manufacturing system may be, for example, an etching system having an etching device.

### <Conclusion>

As described above, film formation device 30M in film formation manufacturing system 5 includes a plurality of processing units each performing processing for manufacturing a product. The request signal to be transmitted to obtain manufacturing condition data from saving device 10 includes the information (the third information) specifying either one of the plurality of processing units. Storage unit 11 of saving device 10 stores, for each processing unit, manufacturing condition data corresponding to the processing unit. Transmitting unit 132 transmits manufacturing condition data based on the information (the third information) of a plurality of manufacturing condition data, to control device 20.

Therefore, control device 20 can obtain manufacturing condition data corresponding to each processing unit from saving device 10.

### [Modification]

In manufacturing systems 1 to 5 in Embodiments 1 to 5, the case where one control device is connected to the saving device has been described as an example. However, the manufacturing system may be configured such that a plurality of control devices are connected to a saving device.

Fig. 26 is a view showing a configuration of a manufacturing system in which a plurality of control devices are connected to a saving device. Referring to Fig. 26, a manufacturing system 6 includes saving device 10 and a plurality of basic systems 9. Control devices 20 of basic systems 9 are connected via communication lines such that they can communicate with each other.

Preferably, control devices 20 of basic systems 9 are connected to saving device 10 via dedicated lines L1. L2, and L3. That is, a dedicated communication line is provided for each control device 20, and a communication device for branching the communication line (for example, a hub for a LAN (Local Area Network)) is not provided in each line.

Therefore, manufacturing system 6 can prevent leak of information from the lines connecting saving device 10 and control devices 20. Further, since leak of information from a branch destination can be prevented by using a dedicated line, a higher security level can be achieved.

It is to be noted that the configuration in which a plurality of control devices are connected to a saving device as shown in Fig. 26 may be applied to manufacturing systems 1 to 5 in Embodiments 1 to 5.

Further, manufacturing systems 1 to 5 in Embodiments 1 to 5 can be applied to a manufacturing device and a manufacturing system for a solar cell such as a monocrystalline/polycrystalline solar cell, a thin film silicon solar cell, and a compound-semiconductor solar cell.

It should be understood that the embodiments disclosed herein are illustrative and are not limited to the contents described above. The scope of the present invention is defined by the scope of the claims, and is intended to include any modifications within the scope and meaning equivalent to the scope of the claims.

### REFERENCE SIGNS LIST

1: manufacturing system, 2: manufacturing system, 3: manufacturing system, 4: manufacturing system, 5: film formation manufacturing system (manufacturing system), 6: manufacturing system, 9: basic system, 9A: basic system, 9B: basic system, 9M: film formation basic system, 10: saving device (information processing device, the first device), 10A: saving device (information processing device, the first device), 10B: saving device (information processing device, the first device), 11: storage unit (the first storage unit), 12: control unit, 12A: control unit, 12B: control unit, 13: communication unit, 20: control device (the second device), 20A: control device (the second device), 20B: control device (the second device), 21: storage unit (the second storage unit), 22: control unit, 22A: control unit, 22B: control unit, 23: display unit, 24: communication unit, 30: manufacturing device, 30M: film formation device, 31: processing unit, 31a: film formation unit, 31b: film formation unit, 31c: film formation unit, 32: transport unit, 33: front chamber, 40: terminal device (the third device), 121: encryption unit, 122: decryption unit, 131: receiving unit, 132: transmitting unit (the first transmitting unit), 221: display control unit, 222: generation unit, 223: erasing unit, 224: decryption unit, 225: encryption unit, 226: change unit, 241: receiving unit, 242: transmitting unit (the second transmitting unit), 2000: computer system, 2030: keyboard, 2040: RAM, 2050: hard disk, 2070: monitor, 2080: communication IF, D1: manufacturing condition data, D2: process data, L1: dedicated line 1, L2: dedicated line 2, L3: dedicated line 3, CA: area, PA: area.

## Claims

1. A manufacturing method for a product in a manufacturing system (1, 2, 3, 4, 5, 6) having a first device (10, 10A, 10B) storing first information indicating a target value which is a manufacturing condition for the product, in a first storage unit (11), and a second device (20, 20A, 20B) controlling a manufacturing device (30, 30M) based on said target value, which are installed in different areas,
the manufacturing method comprising the steps of:
said first device transmitting said first information to said second device;
said second device storing said transmitted first information in a second storage unit (21) of said second device;
said second device causing the manufacturing device to manufacture said product by controlling said manufacturing device based on said first information stored in said second storage unit;
said second device storing second information which is a measurement value relative to said target value obtained when said product is manufactured, in said second storage unit;
said second device erasing said first information from said second storage unit after the step of causing the manufacturing device to manufacture said product;
said second device transmitting said second information to said first device;
said first device storing said transmitted second information in said first storage unit of said first device; and
said second device erasing said second information from said second storage unit after transmitting said second information to said first device.

2. The manufacturing method for the product according to claim 1, wherein said first device is installed in the area (CA) having a security level higher than that of the area (PA) in which said second device is installed.

3. The manufacturing method for the product according to claim 1 or 2, further comprising the step of said first device encrypting said first information,
wherein, in the step of said first device transmitting said first information to said second device, said first device transmits the first information in an encrypted state.

4. The manufacturing method for the product according to any of claims 1 to 3, further comprising the step of said second device encrypting said second information,
wherein, in the step of said second device transmitting said second information to said first device, said second device transmits the second information in an encrypted state.

5. The manufacturing method for the product according to any of claims 1 to 4, wherein, in the steps of said first device storing said first information and/or said second information in said first storage unit, said first device stores the first information and/or the second information in an encrypted state in the first storage unit.

6. The manufacturing method for the product according to any of claims 1 to 5, further comprising the steps of:
said second device changing at least one of said first information and said second information to a relative value or dummy data; and
said second device displaying said relative value or said dummy data on an output device.

7. The manufacturing method for the product according to any of claims 1 to 6, further comprising the steps of:
said second device generating a request signal requesting transmission of new said first information from said first device to said second device after the step of said second device erasing said first information from said second storage unit; and
said second device transmitting said request signal to said first device.

8. The manufacturing method for the product according to any of claims 1 to 7, wherein
said manufacturing device includes a plurality of processing units (31a, 31b, 31c) each performing processing for manufacturing the product, and
said manufacturing method comprises the steps of:
said first device storing, for each of said processing units, said first information corresponding to the processing unit in said first storage unit;
said second device including third information specifying either one of said plurality of processing units in said request signal, and transmitting said request signal including the third information;
said first device transmitting said first information to said second device;
said second device performing processing based on said first information using the processing unit specified by said third information;
said second device including, for each of said processing units, said third information in said second information transmitted by the processing unit, and storing said second information including the third information in said second storage unit;
said second device transmitting said second information including said third information to said first device; and
said first device storing said transmitted second information in said first storage unit.

9. The manufacturing method for the product according to any of claims 1 to 8, comprising the steps of:
said first device storing said first information and said second information each in an encrypted state in said first storage unit;
said first device decrypting said encrypted first information and/or second information, using a decryption unit of said first device; and
said first device transmitting said decrypted first information and/or second information to a third device (40) connected to said first device.

10. The manufacturing method for the product according to any of claims 1 to 9, wherein
said manufacturing system includes a plurality of said second devices, and
said manufacturing method comprises the steps of:
said first device transmitting said first information to said second storage unit of each of said second devices, using a dedicated line (L1, L2, L3) different for each of said second devices; and
each of said second devices transmitting said second information to said first storage unit.

11. A manufacturing system (1, 2, 3, 4, 5, 6), comprising:
a manufacturing device (30, 30M) manufacturing a product;
a control device (20, 20A, 20B) controlling operation of said manufacturing device; and
an information processing device (10, 10A, 10B) capable of communicating with said control device,
wherein said information processing device is placed in an area (CA) different from an area for said manufacturing device and said control device, and includes a first storage unit (11) storing first information indicating a target value which is a manufacturing condition for said product, and a first transmitting unit (132) transmitting said first information to said control device,
said manufacturing device manufactures said product through control by said control device based on said first information, and transmits second information which is a measurement value relative to said target value obtained when said product is manufactured, to said control device,
said control device includes
a second storage unit (21) storing said first information transmitted from said information processing device and said second information transmitted from said manufacturing device,
an erasing unit (223) erasing said first information from said second storage unit based on manufacturing of said product, and
a second transmitting unit (242) transmitting said second information to said information processing device,
said information processing device stores said second information transmitted from said control device in said first storage unit, and
said erasing unit erases said second information from said second storage unit after said second information is transmitted to said information processing device.
